# EUROPÄISCHE PATENTSCHRIFT

(11) **EP 2 321 148 B1**
(45) Veröffentlichungstag und Bekanntmachung des Hinweises auf die Patenterteilung: **17.02.2021**
(21) Anmeldenummer: 09777165.3
(22) Anmeldetag: 14.07.2009
(51) Int. Cl.: B60N 2/02, B60N 2/75

(54) **VERSTELLKINEMATIK FÜR EINE ARMLEHNE**
ADJUSTMENT KINEMATICS FOR AN ARM REST
CINÉMATIQUE DE COMMANDE POUR ACCOUDOIR

(30) Priorität: 02.08.2008 DE 102008036227
(43) Veröffentlichungstag der Anmeldung: 18.05.2011
(73) Patentinhaber: Volkswagen Aktiengesellschaft, 38440 Wolfsburg (DE)
(72) Erfinder: JUNIGE, Bert, 38543 Hillerse (DE); BURJHARD, Gis, 38471 Rühen (DE)
(86) Internationale Anmeldenummer: PCT/EP2009/005091
(87) Internationale Veröffentlichungsnummer: WO 2010/015312

(56) Entgegenhaltungen:
- DE-A1- 19 915 469
- DE-A1-102004 062 942
- DE-A1-102006 023 038
- DE-U1- 20 205 029
- DE-U1-202006 012 228
- US-A- 5 984 416
- US-A1- 2002 089 217

## Beschreibung

Die Erfindung betrifft eine Armlehne nach den Oberbegriffen der Ansprüche 1 und 2.

Die Gebrauchsmusterschrift DE 202 05 029 U1 beschreibt eine Armlehne mit beweglicher Armauflage. Diese Armlehne weist einen Verstellmechanismus für die Linearbewegung der Armauflage auf. Die Armlehne besteht aus einer Armauflage und einem Grundträger, der mit der Armlehnenhalterung, bestehend aus den beiden Haltearmen, verbunden ist. Die Armlehne kann zudem zwischen den Vordersitzen eines Personenkraftwagens, im Bereich der Mittelkonsole, schwenkbar installiert werden. Die Haltearme sind dazu auf einer Welle schwenkbar gelagert. An der Unterseite der Armauflage befinden sich im vorderen und hinteren Bereich jeweils zwei nach innen zeigende Lagerstellen zur Aufnahme von Führungsstangen. Die Lagerstellen sind an der Armauflage angeformt und bilden mit dieser ein Bauteil. Die beiden symmetrisch angeordneten, parallel beabstandeten Führungsstangen sind in den in Auszugsrichtung zeigenden Lagerstellen an der Armauflage befestigt und in, an dem Grundträger befindlichen, Linearführungen geführt. Dadurch kann die Armauflage in dem vorgesehenen Einstellbereich in Längsrichtung verschoben werden. An der Innenseite des Grundträgers, der eine schalenförmige Kontur besitzt, sind ein Rastelement und ein Bremselement befestigt, die aus einem hülsenförmigen Bauteil mit einer integrierten Druckfeder und einer Stahl- oder Kunststoffkugel bestehen und die dazu dienen eine ungewollte Linearbewegung der Armlehne zu verhindern.

Die Gebrauchsmusterschrift DE 20 2006 012 228 U1 beschreibt ebenfalls eine armlehnenartige Konsoleneinrichtung mit einer Armauflage und mit einem Träger, an dem die Armauflage um eine an dem Träger angeordnete Drehachse schwenkbar angeordnet ist. Die Drehachse der Armauflage ist relativ zum Träger aus einer Grundposition in eine Funktionsposition verschiebbar und die Armauflage weist an einem der Drehachse zugeordneten Ende eine Schutzvorrichtung auf, die sich entgegengesetzt zur Armauflage erstreckt. Die Schutzvorrichtung überdeckt einen von der Armauflage durch eine Verschiebebewegung der Armauflage aus der Grundposition in die Funktionsposition freigegebenen Bereich.

Die Patentschrift DE 199 15 469 B4 offenbart eine Armlehne für eine Fahrzeug-Mittelkonsole, mit einer Basiseinrichtung, die mit der Armlehne um eine konsolenfeste erste Schwenkachse verschwenkbar ist. Die Basiseinrichtung weist ein Zahnsegment auf, wodurch innerhalb eines bestimmten Winkelbereiches mehrere Neigungsstellungen der Armlehne einstellbar sind, wobei das Zahnsegment der konsolenfesten ersten Schwenkachse nahe kommt. In der jeweiligen Armlehnen-Stellung greift ein, um eine konsolenfeste zweite Schwenkachse verschwenkbares, Ratschenorgan federunterstützt in das Zahnsegment ein.

Die beschriebenen Lösungen erlauben jeweils eine Verschwenkung der Armlehne und eine Verschiebung einer, in der Funktionsposition auf der Armlehne angeordneten, Armauflage. Dabei ist nur teilweise näher ausgeführt, wie die zugehörige Bedienung der jeweiligen Armlehne beziehungsweise deren Armauflage erfolgt beziehungsweise freigegeben oder gesperrt wird.

Zumeist sind Betätigungselemente angeordnet, die zur Freigabe der jeweiligen Bewegung, Verschwenkung oder Verschiebung, betätigt werden müssen, wodurch jeweils eine Freigabe erfolgt und der Bediener die gewünschte Position einstellen kann.

Teilweise sind die Bedien- und Logikkonzepte so komplex ausgeführt, dass der Kunde überfordert ist, da zur Bewirkung der gewünschten Bewegungen der Armlehne unterschiedliche Bedienhandlungen vorgenommen werden müssen, die sich dem Kunden nur schwer erschließen.

Stand der Technik sind zudem die Druckschriften DE 10 2006 023 038 A1, DE 10 2004 062 942 A1, US 5 984 416 A und US 2002/089 217 A1.

Die Druckschriften DE 10 2006 023 038 A1 und DE 10 2004 062 942 A1 stellen den nächstliegenden Stand der Technik dar. Aus den Druckschriften sind Armlehnen bekannt, die ein Trägerelement aufweisen, welches mit einer Unterkonstruktion in Verbindung steht. Auf dem jeweiligen Trägerelement ist jeweils ein Auflageelement beweglich angeordnet. Trägerelement und Auflageelement sind jeweils um eine Schwenkachse gemeinsam verschwenkbar. Das Auflageelement ist gegenüber dem Trägerelement verschiebbar. Zudem sind jeweils Mittel angeordnet, die das Verschwenken und das Verschieben des Auflageelementes ermöglichen.

Der Erfindung liegt ausgehend von dem Stand der Technik die Aufgabe zugrunde, eine einfache Kinematik und eine sich für den Nutzer leicht erschließende Bedienmöglichkeit für eine Armlehne, insbesondere für eine Mittelarmlehne eines Kraftfahrzeuges, zu schaffen.

Erste Ausführungsform:
Ausgangspunkt der Erfindung ist eine Armlehne, die ein mit einer Unterkonstruktion in Verbindung stehendes Trägerelement mit einem auf dem Trägerelement beweglich angeordneten Auflageelement umfasst,
- wobei das Trägerelement und das Auflageelement gemeinsam gegenüber der Unterkonstruktion durch im oder am Trägerelement angeordnete Mittel um eine erste Schwenkachse schwenkbar sind und das Auflageelement gegenüber dem Trägerelement durch eine Verbindung mit einem der angeordneten Mittel verschiebbar ist,
- wobei die Verschwenkung des Trägerelementes gemeinsam mit dem Auflageelement um die erste Schwenkachse und die Verschiebung des Auflageelementes gegenüber dem Trägerelement durch Betätigung eines einzigen im Auflageelement angeordneten Bedienelementes freigebbar beziehungsweise sperrbar ist, wobei das Bedienelement auf die im oder am Trägerelement angeordneten Mittel einwirkt,
- wobei das Trägerelement eine Führung aufweist, die in oder an dem Trägerelement angeordnet ist,
- wobei als ein die Verschiebung des Auflageelementes gegenüber dem Trägerelement freigebendes oder sperrendes Mittel des Trägerelementes - auf und/oder an und/oder in der Führung - ein einerseits mit dem Auflageelement verbundenes erstes Bremselement angeordnet ist, welches andererseits kraft- und/oder formschlüssig mit der Führung verbunden ist,
- wobei das Trägerelement auf einer Achse/Welle mit der Unterkonstruktion verschwenkbar in Verbindung steht,
- wobei das erste mit dem Auflageelement verbundene Bremselement im oder am Trägerelement angeordnet ist.

Erfindungsgemäß ist in der ersten bevorzugten Ausführungsform vorgesehen, dass
- als ein die Verschwenkung freigebendes oder sperrendes Mittel des Träger- und Auflageelements ein Riegel angeordnet ist, der in eine Aufnahme einer als Konsole ausgebildeten Unterkonstruktion der Armlehne eingreift,
- wobei der Riegel mit dem Bedienelement in Verbindung steht, sodass bei der Betätigung des Bedienelementes gleichzeitig der Riegel aus der Aufnahme der Konsole entriegelt wird.

Bei der ersten Ausführungsform ist bevorzugt vorgesehen, dass das erste Bremselement über ein Verbindungselement mit dem Bedienelement in Verbindung steht, wobei das Verbindungselement im oder am Trägerelement beweglich angeordnet ist, so dass ein durch das Bedienelement hervorgerufener Hub des Verbindungselementes die kraft- und/oder formschlüssige Verbindung zwischen dem mit dem Auflageelement verbundenen ersten Bremselement und der Führung je nach Bewegungsrichtung des Hubes freigibt oder sperrt.

Bevorzugt steht das Bedienelement der ersten Ausführungsform mit dem Riegel über eine Kinematik und/oder über einen Bowdenzug in Verbindung.

Zweite Ausführungsform:
Ausgangspunkt der Erfindung ist eine Armlehne, die ein mit einer Unterkonstruktion in Verbindung stehendes Trägerelement mit einem auf dem Trägerelement beweglich angeordneten Auflageelement umfasst,
- wobei das Trägerelement und das Auflageelement gemeinsam gegenüber der Unterkonstruktion durch im oder am Trägerelement angeordnete Mittel um eine erste Schwenkachse schwenkbar sind und das Auflageelement gegenüber dem Trägerelement durch eine Verbindung mit einem der angeordneten Mittel verschiebbar ist,
- wobei die Verschwenkung des Trägerelementes gemeinsam mit dem Auflageelement um die erste Schwenkachse und die Verschiebung des Auflageelementes gegenüber dem Trägerelement durch Betätigung eines einzigen im Auflageelement angeordneten Bedienelementes freigebbar beziehungsweise sperrbar ist, wobei das Bedienelement auf die im oder am Trägerelement angeordneten Mittel einwirkt,
- wobei das Trägerelement eine Führung aufweist, die in oder an dem Trägerelement angeordnet ist,
- wobei als ein die Verschiebung des Auflageelementes gegenüber dem Trägerelement freigebendes oder sperrendes Mittel des Trägerelementes - auf und/oder an und/oder in der Führung - ein einerseits mit dem Auflageelement verbundenes erstes Bremselement angeordnet ist, welches andererseits kraft- und/oder formschlüssig mit der Führung verbunden ist,
- wobei das Trägerelement auf einer Achse/Welle mit der Unterkonstruktion verschwenkbar in Verbindung steht,
- wobei das erste mit dem Auflageelement verbundene Bremselement im oder am Trägerelement angeordnet ist.

Erfindungsgemäß ist bei der zweiten Ausführungsform vorgesehen, dass
- als ein die Verschwenkung freigebendes oder sperrendes Mittel auf und/oder an und/oder in der Achse/Welle ein zweites einerseits mit dem Trägerelement verbundenes zweites Bremselement angeordnet ist, welches andererseits kraft- und/oder formschlüssig mit der Achse/Welle verbunden ist.
- Bevorzugt ist bei der zweiten Ausführungsform vorgesehen, dass das erste und zweite Bremselement über ein Verbindungselement mit dem Bedienelement in Verbindung stehen, wobei das Verbindungselement im oder am Trägerelement beweglich angeordnet ist, so dass ein durch das Bedienelement hervorgerufener Hub des Verbindungselementes die kraft- und/oder formschlüssige Verbindung zwischen dem erstem mit dem Auflageelement verbundenen Bremselement und der Führung beziehungsweise dem zweitem mit dem Trägerelement verbundenen Bremselement und der Achse/Welle je nach Bewegungsrichtung des Hubes freigibt oder sperrt.

Dabei ist in der zweiten Ausführungsform ferner bevorzugt vorgesehen, dass je nach Länge des Hubes des Bedienelementes entweder das erste oder zweite Bremselement zuerst gelöst wird, so dass über die Verbindungselemente erst eine gemeinsame Verschwenkung des Träger- und Auflageelementes bei einer ersten vorgebbaren Hublänge und erst danach bei einer weiteren vorgebbaren zweiten Hublänge eine Verschiebung des Auflageelementes gegenüber dem Trägerelement oder umgekehrt bewirkbar ist Für beide Ausführungsformen gelten folgende erfindungsgemäße Ausgestaltungen, nämlich,
- dass der Hub des Bedienelementes in der vorgebbaren Länge über die Verbindungselemente gleichzeitig die Freigabe beziehungsweise das Lösen der Bremselemente so bewirkt, dass gleichzeitig die Verschiebung des Auflageelementes gegenüber dem Trägerelement und die gemeinsame Verschwenkung des Träger- und Auflageelementes um die y-Schwenkachse ermöglicht wird;
- dass die Armlehne eine Armlehne für eine Mittelkonsole eines Kraftfahrzeuges ist;
- dass das Trägerelement auf der Achse/Welle verschwenkbar mit der Unterkonstruktion einer Mittelkonsole und/oder einer Lehne eines Kraftfahrzeuges verbunden ist;
- dass die Führung eine Führungsstange ist.

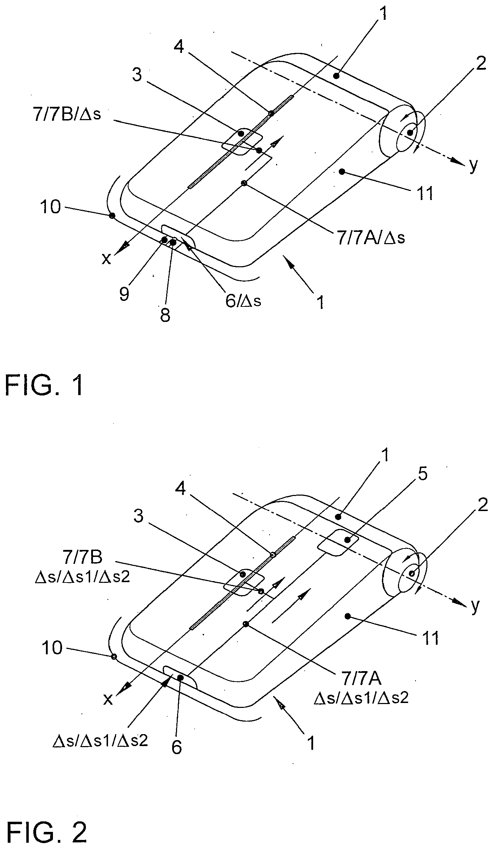

Die Erfindung wird nachfolgend in den zwei Ausführungsformen anhand einer jeweils zugehörigen Zeichnung - Figur 1 und Figur 2 - näher erläutert.

Figur 1 zeigt die erste Ausführungsform gemäß dem ersten Aspekt der Erfindung und Figur 2 die zweite Ausführungsform gemäß dem zweiten Aspekt der Erfindung.

Ein in Figur 1 dargestelltes Trägerelement 1 mit einem auf dem Trägerelement 1 angeordneten Auflageelement 11 einer Armlehne ist drehbar/schwenkbar auf einer y-Achse beziehungsweise einer in y-Richtung verlaufenden Welle 2 gelagert. Das Auflageelement 11 trägt dabei beispielsweise eine nicht dargestellte Polsterung und beispielsweise einen Bezug. Das als Grundelement dienende Trägerelement 1 ist nur im hinteren die Achse beziehungsweise Welle 2 umfassenden Teil sichtbar. Im weiteren vorderen Bereich ist das Trägerelement 1 in dieser perspektivischen schräg von oben gewählten Darstellung von dem Auflageelement 11 verdeckt. Das Trägerelement 1 ist über die Achse/Welle 2 karosseriefest aber beweglich vorzugsweise an der Karosserie des Fahrzeuges oder an der Unterkonstruktion einer Lehne (nicht dargestellt) und/oder einer Konsole 10 der Armlehne (nicht dargestellt) angeordnet und befestigt.

Die zugehörige Konsole 10 der Armlehne ist beispielsweise eine unterhalb der Armlehne angeordnete Mittelkonsole 10, wobei die Konsole 10 im vorderen Bereich der Figur 1 und 2 ansatzweise dargestellt ist.

In Figur 1 ist im oder am Trägerelement 1 der Armlehne eine lineare Führung 4, insbesondere eine Führungsstange, für die Verschiebung des Auflageelementes 11 in x-Richtung - beispielsweise einer Fahrtrichtung - in nicht geschwenkter Position der Armlehne dargestellt.

Auf der nur beispielsweise in y-Richtung ausgebildeten Achse/Welle 2 des Trägerelementes 1 der Armlehne ist in der ersten Ausführungsform kein Mittel zur Freigabe oder Verriegelung der Verschwenkung der Armlehne angebracht.

Dafür ist in der Konsole der Armlehne ein Riegel 8 angeordnet, der in eine Aufnahme 9 der Konsole 10 eingreift und die Armlehne gegenüber der Konsole 10 verriegelt oder freigibt. Dieser Riegel 8 wird von dem beispielsweise als Taster ausgelegten Bedienelement 6 angesprochen, indem ein Hub Δs des Bedienelementes 6 über eine nicht näher dargestellte Kinematik und/oder einen Bowdenzug auf den Riegel übertragen wird.

Das Bedienelement 6 ist ferner mit dem ersten Bremselement 3 über ein Verbindungselement 7, 7A, 7B verbunden. Durch Betätigung des Tasters 6, der die Betätigungsbewegung - Hub Δs - des Tasters 6 über die Verbindungselemente 7, 7A, 7B auf die Führung des ersten Bremselementes 3 überträgt, ist durch Lösen des ersten Bremselementes 3 das Auflageelement 11 gegenüber dem Trägerelement 1 verschiebbar. Bei nicht geschwenkter Armlehne erfolgt die Verschiebung des Auflageelementes 11 gegenüber dem Trägerelement 1 in x-Richtung.

In der ersten Ausführungsform wird mit der Freigabe des ersten Bremselementes 3 auf der Führung 4 das Auflageelement 11 freigegeben. Bei der Betätigung des Bedienelementes 6 wird gleichzeitig der Riegel 8 aus der Konsole 10 der Aufnahme 9 der Konsole 10 entriegelt.

Nun ist die Längsverschiebung des Auflageelementes 11 gegenüber dem Trägerelement linear über die Führung 4 unter Freigabe des ersten Bremselementes 3 möglich. Gleichzeitig ist die Schwenkbewegung der Armlehne durch das entriegelte frei um die Achse/Welle 2 schwenkbare Trägerelement 1 mit dem darauf angeordneten Auflageelement 11 unabhängig von der Position den Auflageelementes 11 möglich.

Wird beispielsweise das Bedienelement 6 bei nicht geschwenkter Armlehne in der in x-Richtung nach vorne verschobenen Position des Auflageelement 11 nicht mehr betätigt, so setzt das erste Bremselement 3 das Auflageelement 11 auf der Führung 4 des Trägerelementes 1 in einer vorgebbaren Position entlang der Fahrtrichtung in x-Richtung fest. Es erfolgt dann in dieser Position gleichzeitig wieder Verriegelung des Trägerelementes 1 durch den Riegel 8 gegenüber der Aufnahme 9 der Mittelkonsole 10.

Grundsätzlich ist somit nach Betätigung eines einzigen Bedienelementes 6 ein Verschieben des Auflageelementes gegenüber dem Trägerelement 1 beziehungsweise ein gemeinsames Schwenken von Trägerelement 1 und Auflageelement 11 möglich.

In der Figur 1 ist das zwischen Bedienelement 6 und erstem Bremselement 3 angeordnete Verbindungselement aus einem Verbindungselement 7A in x-Richtung und einem Verbindungselement 7B in y-Richtung dargestellt, so dass das in y-Richtung verlaufende Verbindungselement 7B somit orthogonal von dem in x-Richtung verlaufenden Verbindungselement 7A abzweigt. Diese Ausführung entspricht der zweiten Ausführungsform der Figur 2, da dort über eine Verbindungsanordnung 7, 7A, 7B zwei Bremselemente 3, 5 angesprochen werden und das Verbindungselement 7A in gerader Verlängerung zu dem zweiten Bremselement 5 weitergeführt ist.

In der ersten Ausführungsform kann die Führung 4 mit dem ersten Bremselement 3 auch in gerader Verlängerung zum Bedienelement 6 angeordnet werden, so dass eine einfache, in x-Richtung verlaufende, Anordnung eines Verbindungselementes 7 ohne orthogonalen Abzweig ausführbar ist. Die dargestellte Anordnung der Verbindungselemente 7, 7A, 7B ist aber auch für die erste Ausführungsform insbesondere dann bevorzugt ausführbar, wenn ein Bauraum mit nach oben platzsparender Ausführung mit einem seitlichen Zugriff auf das erste Bremselement 3 realisiert werden soll.

Figur 2 zeigt die zweite Ausführungsform. Ein wie in Figur 1 aufgebautes, dargestelltes und beschriebenes Trägerelement 1 und Auflageelement 11 einer Armlehne ist drehbar/schwenkbar auf einer Achse beziehungsweise Welle 2 gelagert.

Auf der beispielsweise in y-Richtung ausgebildeten Achse/Welle 2 des Trägerelementes 1 der Armlehne ist im Unterschied zur ersten Ausführungsform der Figur 1 ein Mittel zur Freigabe oder Verriegelung der Verschwenkung der Armlehne um die y-Achse angebracht. Hier ist ein die Armlehne freigebende oder sperrende Mittel zur Verschwenkung kein Riegel 8, wie in der ersten Ausführungsform beschrieben, sondern ein auf und/oder an und/oder in der Achse/Welle 2 angeordnetes zweites einerseits mit dem Trägerelement 1 verbundenes Bremselement 5, welches andererseits kraft- und/oder formschlüssig mit der Achse/Welle 2 verbunden ist.

Im oder Trägerelement 1 der Armlehne ist wie bei der ersten Ausführungsform eine lineare Führung 4 für die Verschiebung des Auflageelementes 11 gegenüber dem Trägerelementes 1 vorgesehen. In oder an der Führung 4 ist ein erstes einerseits mit dem Auflageelement 11 in Verbindung stehendes Bremselement 3 ausgeführt, welches andererseits ebenfalls kraft- und/oder formschlüssig mit der Führung 4 in Verbindung steht.

Ein Bedienelement 6, beispielsweise wieder ein Taster oder dergleichen, ist in der zweiten Ausführungsform aber mit beiden Bremselementen 3, 5 über ein Verbindungselement 7, 7A, 7B verbunden.

Durch Betätigung des Tasters 6, der die Betätigungsbewegung - Hub Δs - des Tasters 6 über die Verbindungselemente 7, 7A, 7B auf die beiden Bremselemente 3, 5 gleichzeitig oder nacheinander überträgt, werden beide Bremselemente 3, 5 gleichzeitig oder nacheinander gelöst und das Auflageelement 11 kann gleichzeitig oder nicht gleichzeitig mit der Verschwenkung der Armlehne gegenüber dem Trägerelement 1 verschoben werden, wobei in verschiedenen Ausgestaltungen bei einem gestuften Lösen beziehungsweise Anziehen der Bremselemente 3, 5 gegenüber der Führung 4 die Verschiebung des Auflageelementes 11 gegenüber dem Trägerelement 1 und/oder das Verschwenken der Armlehne gestuft - also nacheinander - erfolgt.

Bei einer solchen gestuften Bedienung der Armlehne kann in einer ersten Ausgestaltung der zweiten Ausführungsform die Bremswirkung der Bremselemente 3, 5 so bemessen sein, dass je nach Stärke der Betätigungsbewegung, also je nach Hub Δs des Tasters 6, entweder das erste oder zweite Bremselement 3, 5 infolge einer ersten Hublänge Δs1 zuerst gelöst wird, so dass zunächst eine Verschwenkung um die y-Schwenkachse und erst danach, nach einer weiteren Betätigung des Tasters 6 und einer bewirkten weiteren zweiten Hublänge Δs2, eine Verschiebung des Auflageelementes 11 gegenüber dem Trägerelement 1 der Armlehne oder umgekehrt bewirkbar ist.

Eine Auslegung der Betätigung kann in einer zweiten Ausgestaltung der zweiten Ausführungsform auch derart erfolgen, dass durch einen Hub Δs gleicher Länge gleichzeitig die Freigabe beziehungsweise das Lösen beider Bremselemente 3, 5 bewirkt wird, so dass gleichzeitig die Verschiebung des Auflageelementes 11 gegenüber dem Trägerelement 1 und die Verschwenkung der Armlehne insgesamt um die y-Schwenkachse ermöglicht wird.

Bei der Betätigung des Tasters 6 wird das Verbindungselement 7, 7A, 7B je nach erster oder zweiter Ausgestaltung der Erfindung in der jeweiligen Hublänge Δs/Δs1/Δs2 verlagert, wobei das Verbindungselement 7 derart aufgebaut ist, dass ein zum zweiten Bremselement 5 führender Teil des Verbindungselementes 7A in gerader Verlängerung zum Bedienelement 6 hin angeordnet ist und ein zum ersten Bremselement 3 führender Teil des Verbindungselementes 7B im Wesentlichen orthogonal, platzsparend auf einer horizontalen Ebene liegend, vom ersten Teil des Verbindungselementes 7A abzweigt. Als Verbindungselement 7, 7A, 7B kann ein Gestänge und/oder Bowdenzüge oder dergleichen eingesetzt werden. Die entsperrende Bewegungsrichtung des Verbindungselementes 7, 7A, 7B, hervorgerufen durch Betätigung des Bedienelementes 6, ist durch die Richtungspfeile in den Figuren angegeben.

Ein Loslassen des Tasters 6, also eine Bewegung entgegen der in der Figur gekennzeichneten Richtungspfeile, bewirkt, dass beide Bremselemente 3, 5 je nach erster oder zweiter Ausgestaltung der zweiten Ausführungsform der Erfindung entweder nacheinander oder gleichzeitig wieder mit der Führung 4 beziehungsweise der Achse/Welle 2 kraft- und/oder formschlüssig verbunden - gesperrt - werden.

Dabei sind durch den Bediener entlang der Führung 4 und entlang des Umfanges der Achse/Welle 2 nach der gewünschten Verstellaktion - Verschwenken der gesamten Armlehne und/oder Verschieben des Auflageelementes 11 gegenüber dem Trägerelement 1 - je nach zwischenzeitlichem Loslassen des Bedienelementes 6 neben den Endpositionen auch alle Zwischenpositionen einstellbar. Die Bremselemente 3, 5 können jeweils auch vom Betätigungshub des Bedienelementes 6 abhängigen, aber unabhängig voneinander ausgeführten Verbindungselementen 7, angesteuert werden.

Das Auflageelement 11 ist gegenüber dem Trägerelement 1 ausgehend von der in der in Figur 1 und 2 dargestellten Position beispielsweise um einen Betrag Δx in Fahrtrichtung x und zurück verschiebbar, wobei diese Verstellung in jeder denkbaren Neigung zwischen horizontaler Anordnung 0° und nach oben gerichteter vertikaler Anordnung 90° möglich ist. Es ist auch denkbar die Neigungsverstellung über die vertikale Anordnung von 90° hinaus und ausgehend von der horizontalen Anordnung nach unten schwenkbar auszulegen.

Diese erfindungsgemäße Lösung mit ihren Aspekten und Ausführungsformen und Ausgestaltungen ermöglicht, dass ein einziges Bedienelement 6 die gewünschten Bewegungen der Armlehne auszulösen vermag. Es ergibt sich durch die Anordnung der Mittel 3, 5, 7A, 7B oder 3, 7A, 8 eine einfache Bedienlogik, mittels der die gewünschten Positionen nach einer Freigabe variabel einstellbar und sperrbar sind.

### Bezugszeichenliste

- 1: Trägerelement
- 2: Achse/Welle
- 3: erstes Bremselement
- 4: Führung
- 5: zweites Bremselement
- 6: Bedienelement [Taster]
- 7: Verbindungselement
- 7A: Verbindungselement in x-Richtung
- 7B: Verbindungselement in y-Richtung
- 8: Riegel
- 9: Aufnahme
- 10: Mittelkonsole
- 11: Auflageelement
- Δs: Hublänge
- Δs1: erste Hublänge
- Δs2: zweite Hublänge
- x: x-Fahrtrichtung
- y: y-Schwenkachse

## Patentansprüche

1. Armlehne, die ein mit einer Unterkonstruktion in Verbindung stehendes Trägerelement (1) mit einem auf dem Trägerelement (1) beweglich angeordneten Auflageelement (11) umfasst,
• wobei das Trägerelement (1) und das Auflageelement (11) gemeinsam gegenüber der Unterkonstruktion durch im oder am Trägerelement (1) angeordnete Mittel (3, 7, 8) um eine erste Schwenkachse (y) schwenkbar sind und das Auflageelement (11) gegenüber dem Trägerelement (1) durch eine Verbindung mit einem der angeordneten Mittel (3) verschiebbar ist,
• wobei die Verschwenkung des Trägerelementes (1) gemeinsam mit dem Auflageelement (11) um die erste Schwenkachse (y) und die Verschiebung des Auflageelementes (11) gegenüber dem Trägerelement (1) durch Betätigung eines einzigen im Auflageelement (11) angeordneten Bedienelementes (6) freigebbar beziehungsweise sperrbar ist, wobei das Bedienelement (6) auf die im oder am Trägerelement (1) angeordneten Mittel (3, 7, 8) einwirkt,
• wobei das Trägerelement (1) eine Führung (4) aufweist, die in oder an dem Trägerelement (1) angeordnet ist,
• wobei als ein die Verschiebung des Auflageelementes (11) gegenüber dem Trägerelement freigebendes oder sperrendes Mittel des Trägerelementes (1) - auf und/oder an und/oder in der Führung (4) - ein einerseits mit dem Auflageelement (1) verbundenes erstes Bremselement (3) angeordnet ist, welches andererseits kraft- und/oder formschlüssig mit der Führung (4) verbunden ist,
• wobei das Trägerelement (1) auf einer Achse/Welle (2) mit der Unterkonstruktion verschwenkbar in Verbindung steht,
• wobei das erste mit dem Auflageelement (11) verbundene Bremselement (3) im oder am Trägerelement (1) angeordnet ist, wobei
• als ein die Verschwenkung freigebendes oder sperrendes Mittel des Träger- und Auflageelements (1, 11) ein Riegel (8) angeordnet ist, der in eine Aufnahme (9) einer als Konsole (10) ausgebildeten Unterkonstruktion der Armlehne eingreift,
• wobei der Riegel (8) mit dem Bedienelement (6) in Verbindung steht, sodass bei der Betätigung des Bedienelementes (6) gleichzeitig der Riegel (8) aus der Aufnahme (9) der Konsole (10) entriegelt wird.

2. Armlehne, die ein mit einer Unterkonstruktion in Verbindung stehendes Trägerelement (1) mit einem auf dem Trägerelement (1) beweglich angeordneten Auflageelement (11) umfasst,
• wobei das Trägerelement (1) und das Auflageelement (11) gemeinsam gegenüber der Unterkonstruktion durch im oder am Trägerelement (1) angeordnete Mittel (3, 5, 7) um eine erste Schwenkachse (y) schwenkbar sind und das Auflageelement (11) gegenüber dem Trägerelement (1) durch eine Verbindung mit einem der angeordneten Mittel (3) verschiebbar ist,
• wobei die Verschwenkung des Trägerelementes (1) gemeinsam mit dem Auflageelement (11) um die erste Schwenkachse (y) und die Verschiebung des Auflageelementes (11) gegenüber dem Trägerelement (1) durch Betätigung eines einzigen im Auflageelement (11) angeordneten Bedienelementes (6) freigebbar beziehungsweise sperrbar ist, wobei das Bedienelement (6) auf die im oder am Trägerelement (1) angeordneten Mittel (3, 5, 7) einwirkt,
• wobei das Trägerelement (1) eine Führung (4) aufweist, die in oder an dem Trägerelement (1) angeordnet ist,
• wobei als ein die Verschiebung des Auflageelementes (11) gegenüber dem Trägerelement freigebendes oder sperrendes Mittel des Trägerelementes (1) - auf und/oder an und/oder in der Führung (4) - ein einerseits mit dem Auflageelement (1) verbundenes erstes Bremselement (3) angeordnet ist, welches andererseits kraft- und/oder formschlüssig mit der Führung (4) verbunden ist,
• wobei das Trägerelement (1) auf einer Achse/Welle (2) mit der Unterkonstruktion verschwenkbar in Verbindung steht,
• wobei das erste mit dem Auflageelement (11) verbundene Bremselement (3) im oder am Trägerelement (1) angeordnet ist,
wobei
• als ein die Verschwenkung freigebendes oder sperrendes Mittel auf und/oder an und/oder in der Achse/Welle (2) ein zweites einerseits mit dem Trägerelement (1) verbundenes zweites Bremselement (5) angeordnet ist, welches andererseits kraft- und/oder formschlüssig mit der Achse/Welle (2) verbunden ist.

3. Armlehne nach Anspruch 1 oder 2,
**dadurch gekennzeichnet, dass**
das erste Bremselement (3) über ein Verbindungselement (7) mit dem Bedienelement (6) in Verbindung steht, wobei das Verbindungselement (7) im oder am Trägerelement (1) beweglich angeordnet ist, so dass ein durch das Bedienelement (6) hervorgerufener Hub (Δs) des Verbindungselementes (7) die kraft- und/oder formschlüssige Verbindung zwischen dem mit dem Auflageelement (11) verbundenen ersten Bremselement (3) und der Führung (4) je nach Bewegungsrichtung des Hubes (Δs) freigibt oder sperrt.

4. Armlehne nach Anspruch 2,
**dadurch gekennzeichnet, dass**
das erste und zweite Bremselement (3, 5) über ein Verbindungselement (7) mit dem Bedienelement (6) in Verbindung stehen, wobei das Verbindungselement (7) im oder am Trägerelement (1) beweglich angeordnet ist, so dass ein durch das Bedienelement (6) hervorgerufener Hub (Δs) des Verbindungselementes (7) die kraft- und/oder formschlüssige Verbindung zwischen dem erstem mit dem Auflageelement (11) verbundenen Bremselement (3) und der Führung (4) beziehungsweise dem zweitem mit dem Trägerelement (1) verbundenen Bremselement (5) und der Achse/Welle (2) je nach Bewegungsrichtung des Hubes (Δs) freigibt oder sperrt.

5. Armlehne nach Anspruch 4,
**dadurch gekennzeichnet, dass**
je nach Länge (Δs1, Δs2) des Hubes (Δs) des Bedienelementes (6) entweder das erste oder zweite Bremselement (3, 5) zuerst gelöst wird, so dass über die Verbindungselemente (7) erst eine gemeinsame Verschwenkung des Träger- und Auflageelementes (1, 11) bei einer ersten vorgebbaren Hublänge (Δs1) und erst danach bei einer weiteren vorgebbaren zweiten Hublänge (Δs2) eine Verschiebung des Auflageelementes (11) gegenüber dem Trägerelement (1) oder umgekehrt bewirkbar ist.

6. Armlehne nach Anspruch 4,
**dadurch gekennzeichnet, dass**
der Hub (Δs) des Bedienelementes (6) in der vorgebbaren Länge (Δs1, Δs2) über die Verbindungselemente (7) gleichzeitig die Freigabe beziehungsweise das Lösen der Bremselemente (3, 5) so bewirkt, dass gleichzeitig die Verschiebung des Auflageelementes (11) gegenüber dem Trägerelement (1) und die gemeinsame Verschwenkung des Träger- und Auflageelementes (1, 11) um die y-Schwenkachse ermöglicht wird.

7. Armlehne nach Anspruch 1 oder 2,
**dadurch gekennzeichnet, dass**
die Armlehne eine Armlehne für eine Mittelkonsole eines Kraftfahrzeuges ist.

8. Armlehne nach Anspruch 1 oder 2,
**dadurch gekennzeichnet, dass**
das Trägerelement (1) auf der Achse/Welle (2) verschwenkbar mit der Unterkonstruktion einer Mittelkonsole und/oder einer Lehne eines Kraftfahrzeuges verbunden ist.

9. Armlehne nach Anspruch 1 oder 2,
**dadurch gekennzeichnet, dass**
die Führung (4) eine Führungsstange ist.

10. Armlehne nach Anspruch 1,
**dadurch gekennzeichnet, dass**
das Bedienelement (6) mit dem Riegel (8) über eine Kinematik und/oder über einen Bowdenzug in Verbindung steht.

## Claims

1. Arm rest comprising a support element (1) which is connected to a substructure, having a bearing element (11) which is movably arranged on the support element (1),
• wherein the support element (1) and the bearing element (11) are jointly pivotable about a first pivot axis (y) with respect to the substructure via means (3, 7, 8) arranged in or on the support element (1), and the bearing element (11) is displaceable relative to the support element (1) via a connection to one of the arranged means (3),
• wherein the pivoting of the support element (1) jointly with the bearing element (11) about the first pivot axis (y), and the displacement of the bearing element (11) relative to the support element (1), can be released or blocked by actuating a single operating element (6) arranged in the bearing element (11), wherein the operating element (6) acts on the means (3, 7, 8) arranged in or on the support element (1),
• wherein the support element (1) has a guide (4) arranged in or on the support element (1),
• wherein a first braking element (3), which is connected on the one hand to the bearing element (1), at and/or on and/or in the guide (4), is arranged as a means of the support element (1) which releases or blocks the displacement of the bearing element (11) relative to said support element (1), which braking element (3) is on the other hand non-positively or positively connected to the guide (4),
• wherein the support element (1) is pivotably connected to the substructure on an axle/shaft (2),
• wherein the first brake element (3) connected to the bearing element (11) is arranged in or on the support element (1),
• wherein a catch (8) which engages in a receptacle (9) of a substructure of the arm rest, said substructure being designed as a console (10), is arranged as a means of the support element and bearing element (1, 11) for releasing or blocking the pivoting,
• wherein the catch (8) is connected to the operating element (6) so that, when the operating element (6) is actuated, the catch (8) is simultaneously unlatched from the receptacle (9) of the console (10).

2. Arm rest comprising a support element (1) which is connected to a substructure, having a bearing element (11) which is movably arranged on the support element (1),
• wherein the support element (1) and the bearing element (11) are jointly pivotable about a first pivot axis (y) with respect to the substructure via means (3, 5, 7) arranged in or on the support element (1), and the bearing element (11) is displaceable relative to the support element (1) via a connection to one of the arranged means (3),
• wherein the pivoting of the support element (1) jointly with the bearing element (11) about the first pivot axis (y), and the displacement of the bearing element (11) relative to the support element (1), can be released or blocked by actuating a single operating element (6) arranged in the bearing element (11), wherein the operating element (6) acts on the means (3, 5, 7) arranged in or on the support element (1),
• wherein the support element (1) has a guide (4) arranged in or on the support element (1),
• wherein a first braking element (3), which is connected on the one hand to the bearing element (1), at and/or on and/or in the guide (4), is arranged as a means of the support element (1) which releases or blocks the displacement of the bearing element (11) relative to said support element (1), which braking element (3) is on the other hand non-positively or positively connected to the guide (4),
• wherein the support element (1) is pivotably connected to the substructure on an axle/shaft (2),
• wherein the first brake element (3) connected to the bearing element (11) is arranged in or on the support element (1),
• wherein a second braking element (5), which is connected on the one hand to the support element (1), at and/or on and/or in the axis/shaft (2) is arranged as a means which releases or blocks the pivoting, which braking element is on the other hand connected non-positively or positively to the axis/shaft (2).

3. Arm rest according to claim 1 or 2,
**characterized in that**
the first braking element (3) is connected to the operating element (6) via a connecting element (7), wherein the connecting element (7) is arranged movably in or on the support element (1) so that a stroke (Δs) of the connecting element (7) that is caused by the operating element (6) releases or blocks the non-positive or positive connection between the first braking element (3) connected to the bearing element (11) and the guide (4), depending on the direction of movement of the stroke (Δs).

4. Arm rest according to claim 2,
**characterized in that**
the first and second braking element (3, 5) are connected to the operating element (6) via a connecting element (7), wherein the connecting element (7) is arranged movably in or on the support element (1) so that a stroke (Δs) of the connecting element (7) that is caused by the operating element (6) releases or blocks the non-positive or positive connection between the first braking element (3) connected to the bearing element (11) and the guide (4), or between the second braking element (5) connected to the support element (1) and the axis/shaft (2), depending on the direction of movement of the stroke (Δs).

5. Arm rest according to claim 4,
**characterized in that**
depending on the length (Δs1, Δs2) of the stroke (Δs) of the operating element (6), either the first or second braking element (3, 5) is initially disengaged so that, via the connecting elements (7), firstly a joint pivoting of the support element and bearing element (1, 11) can be effected given a first predeterminable stroke length (Δs1), and only thereafter, given a further predeterminable second stroke length (Δs2), can a displacement of the bearing element (11) relative to the carrier element (1) or vice versa be effected.

6. Arm rest according to claim 4,
**characterized in that**
the stroke (Δs) of the operating element (6) in the predeterminable length (Δs1, Δs2) simultaneously effects, via the connecting elements (7), the release or disengagement of the braking elements (3, 5) in such a way that, simultaneously, the displacement of the bearing element (11) relative to the support element (1) and the common pivoting of the support element and bearing element (1, 11) about the y pivot axis are enabled.

7. Arm rest according to claim 1 or 2,
**characterized in that**
the arm rest is an arm rest for a center console of a motor vehicle.

8. Arm rest according to claim 1 or 2,
**characterized in that**
the support element (1) is pivotably connected on the axle/shaft (2) to the substructure of a center console and/or a rest of a motor vehicle.

9. Arm rest according to claim 1 or 2,
**characterized in that**
the guide (4) is a guide rod.

10. Arm rest according to claim 1,
**characterized in that**
the operating element (6) is connected to the catch (8) via kinematics and/or via a Bowden cable.

## Revendications

1. Accoudoir comprenant un élément support (1) en liaison avec une sous-construction, lequel élément comprend un élément d'appui (11) disposé de manière mobile sur l'élément support (1),
• l'élément support (1) et l'élément d'appui (11) pouvant pivoter conjointement par rapport à la sous-construction autour d'un premier axe de pivotement (y) à l'aide de moyens (3, 7, 8) agencés dans l'élément support (1) ou au niveau de celui-ci et l'élément d'appui (11) pouvant coulisser par rapport à l'élément support (1) par une liaison avec l'un des moyens agencés (3),
• le pivotement de l'élément support (1) conjointement avec l'élément d'appui (11) autour du premier axe de pivotement (y) et le coulissement de l'élément d'appui (11) par rapport à l'élément support (1) pouvant être libérés ou bloqués par actionnement d'un seul élément de commande (6) agencé dans l'élément d'appui (11), l'élément de commande (6) agissant sur les moyens (3, 7, 8) agencés dans l'élément support (1) ou au niveau de celui-ci,
• l'élément support (1) présentant un guide (4) qui est agencé dans l'élément support (1) ou au niveau de celui-ci,
• un premier élément de frein (3), relié d'une part à l'élément d'appui (1) et relié d'autre part à force et/ou par complémentarité de forme au guide (4) étant agencé en tant que moyen de l'élément support (1) - sur le guide (4) et/ou au niveau de celui-ci et/ou dans celui-ci - libérant ou bloquant le coulissement de l'élément d'appui (11) par rapport à l'élément support,
• l'élément support (1) étant relié à la sous-construction de manière pivotante sur un axe/arbre (2),
• le premier élément de frein (3) relié à l'élément d'appui (11) étant agencé dans l'élément support (1) ou au niveau de celui-ci,
• un pêne (8) étant agencé en tant que moyen libérant ou bloquant le pivotement de l'élément support et de l'élément d'appui (1, 11), lequel pêne vient en prise dans un logement (9) d'une sous-construction de l'accoudoir conçue comme console (10),
• le pêne (8) étant relié à l'élément de commande (6), de telle sorte que lors de l'actionnement de l'élément de commande (6), le pêne (8) est déverrouillé simultanément du logement (9) de la console (10).

2. Accoudoir comprenant un élément support (1) en liaison avec une sous-construction, lequel élément comprend un élément d'appui (11) disposé de manière mobile sur l'élément support (1),
• l'élément support (1) et l'élément d'appui (11) pouvant pivoter conjointement par rapport à la sous-construction à l'aide de moyens (3, 5, 7) agencés dans l'élément support (1) ou au niveau de celui-ci autour d'un premier axe de pivotement (y) et l'élément d'appui (11) pouvant coulisser par rapport à l'élément support (1) par une liaison avec l'un des moyens agencés (3),
• le pivotement de l'élément support (1) conjointement avec l'élément d'appui (11) autour du premier axe de pivotement (y) et le coulissement de l'élément d'appui (11) par rapport à l'élément support (1) pouvant être libérés ou bloqués par actionnement d'un seul élément de commande (6) agencé dans l'élément d'appui (11), l'élément de commande (6) agissant sur les moyens (3, 5, 7) agencés dans l'élément support (1) ou au niveau de celui-ci,
• l'élément support (1) présentant un guide (4) qui est agencé dans l'élément support (1) ou au niveau de celui-ci,
• un premier élément de frein (3), relié d'une part à l'élément d'appui (1) et relié d'autre part à force et/ou par complémentarité de forme au guide (4) étant agencé en tant que moyen de l'élément support (1) - sur le guide (4) et/ou au niveau de celui-ci et/ou dans celui-ci - libérant ou bloquant le coulissement de l'élément d'appui (11) par rapport à l'élément support,
• l'élément support (1) étant relié à la sous-construction de manière pivotante sur un axe/arbre (2),
• le premier élément de frein (3) relié à l'élément d'appui (11) étant agencé dans l'élément support (1) ou au niveau de celui-ci,
• un deuxième élément de frein (5) relié d'une part à l'élément support (1) et relié d'autre part à force et/ou par complémentarité de forme à l'axe/arbre (2) étant agencé sur l'axe/arbre (2) et/ou au niveau de celui-ci et/ou dans celui-ci en tant que moyen libérant ou bloquant le pivotement.

3. Accoudoir selon la revendication 1 ou 2,
**caractérisé en ce que**
un premier élément de frein (3) est relié via un élément de liaison (7) à l'élément de commande (6), l'élément de liaison (7) étant agencé de manière mobile dans l'élément support (1) ou au niveau de celui-ci de telle sorte qu'une course (Δs) de l'élément de liaison (7), provoquée par l'élément de commande (6), libère ou bloque la liaison à force et/ou par complémentarité de forme entre le premier élément de frein (3) relié à l'élément d'appui (11) et le guide (4), en fonction du sens de déplacement de la course (Δs).

4. Accoudoir selon la revendication 2,
**caractérisé en ce que**
le premier et le deuxième élément de frein (3, 5) sont reliés via un élément de liaison (7) à l'élément de commande (6), l'élément de liaison (7) étant agencé de manière mobile dans l'élément support (1) ou au niveau de celui-ci de telle sorte qu'une course (Δs) de l'élément de liaison (7), provoquée par l'élément de commande (6), libère ou bloque la liaison à force et/ou par complémentarité de forme entre le premier élément de frein (3) relié à l'élément d'appui (11) et le guide (4), ou entre le deuxième élément de frein (5) relié à l'élément support (1) et l'axe/arbre (2) en fonction du sens de déplacement de la course (Δs).

5. Accoudoir selon la revendication 4,
**caractérisé en ce que**
en fonction de la longueur (Δs1, Δs2) de la course (Δs) de l'élément de commande (6), soit le premier soit le deuxième élément de frein (3, 5) est d'abord relâché, de telle sorte qu'à une première longueur de course (Δs1) pouvant être prédéfinie, un pivotement commun de l'élément support et de l'élément d'appui (1, 11) peut d'abord être provoqué via les éléments de liaison (7) et ce n'est qu'ensuite, à une deuxième longueur de course (Δs2) pouvant être prédéfinie, qu'un coulissement de l'élément d'appui (11) par rapport à l'élément support (1) peut être provoqué, ou inversement.

6. Accoudoir selon la revendication 4,
**caractérisé en ce que**
la course (Δs) de l'élément de commande (6), à la longueur (Δs1, Δs2) pouvant être définie, provoque, via les éléments de liaison (7), simultanément la libération ou le relâchement des éléments de frein (3, 5) de telle sorte que le coulissement de l'élément d'appui (11) par rapport à l'élément support (1) et le pivotement commun de l'élément support et de l'élément d'appui (1, 11) autour de l'axe de pivotement y sont possibles simultanément.

7. Accoudoir selon la revendication 1 ou 2,
**caractérisé en ce que**
l'accoudoir est un accoudoir pour une console centrale d'un véhicule automobile.

8. Accoudoir selon la revendication 1 ou 2,
**caractérisé en ce que**
l'élément support (1) sur l'axe/arbre (2) est relié de manière pivotante à la sous-construction d'une console centrale et/ou d'un dossier d'un véhicule automobile.

9. Accoudoir selon la revendication 1 ou 2,
**caractérisé en ce que**
le guide (4) est une tige de guidage.

10. Accoudoir selon la revendication 1,
**caractérisé en ce que**
l'élément de commande (6) est relié au pêne (8) via une chaîne cinématique et/ou via un câble Bowden.
